**Europäisches Patentamt**

**European Patent Office**

**Office européen des brevets**

(11) Veröffentlichungsnummer: **0 125 434**

**A2**

## (12) EUROPÄISCHE PATENTANMELDUNG

(21) Anmeldenummer: **84103077.8**

(22) Anmeldetag: **21.03.84**

(51) Int. Cl.³: **B 23 Q 3/157**

(30) Priorität: **20.04.83 DE 3314208**
**06.07.83 DE 3324312**

(43) Veröffentlichungstag der Anmeldung:
**21.11.84 Patentblatt 84/47**

(84) Benannte Vertragsstaaten:
**CH DE FR GB IT LI SE**

(71) Anmelder: **Komet Stahlhalter- und Werkzeugfabrik Robert Breuning GmbH**
**Auf dem Kies 3**
**D-7122 Besigheim(DE)**

(72) Erfinder: **Eckle, Otto**
**Friedenstrasse 9**
**D-7121 Löchgau(DE)**

(72) Erfinder: **Perthen, Rainer**
**Ahornweg 19**
**D-7122 Besigheim(DE)**

(74) Vertreter: **Liebau, Gerhard, Dipl.-Ing.**
**Birkenstrasse 39**
**D-8900 Augsburg 22(DE)**

(54) **Werkzeugmaschine mit Werkzeugwechselvorrichtung.**

(57) Eine Werkzeugmaschine mit Werkzeugwechselvorrichtung weist eine Werkzeugmaschinenspindel (1) auf, die an ihrem freien Ende einen zylindrischen Schaft (10) und eine diesen umgebende, senkrecht zur Spindelachse (S-S) verlaufende, Ringfläche (13) besitzt. Ein mit der Spindel verbindbarer Werkzeughalter (50) weist eine genau zum Schaft (10) passende Aufnahmebohrung (3) und eine diese umgebende, senkrecht zur Schaftachse verlaufende, ringförmige Stirnfläche (4) auf. Der Werkzeughalter (50) ist im Bereich der zylindrischen Aufnahmebohrung (3) mit zwei diametral gegenüberliegenden, radial verlaufenden Innengewinden versehen, in denen je eine mit einem kegelförmigen Ansatz (7a) oder einer kegelförmigen Vertiefung (8a) versehene Spannschraube (7, 8) verschraubbar ist. In einer Querbohrung des Schaftes (10) ist ein Spannbolzen (12) radial verschiebbar, der an seinen beiden Enden je eine mit den kegelförmigen Ansätzen bzw. Vertiefungen der Spannschrauben (7, 8) zusammenwirkende, kegelförmige Vertiefung (12b) bzw. einen kegelförmigen Ansatz (12a) aufweist. Der Abstand der Achse der Innengewinde von der Stirnfläche (4) ist etwas größer als der Abstand der Achse der Querbohrung von der Ringfläche (13). Am freien Ende eines Wechselarmes (52) ist ein radial zur Bohrungsachse der Aufnahmebohrung (3) verschiebbarer Wechselkopf (53) vorgesehen, der an seinem, dem Werkzeughalter (50) zugekehrten äußeren Ende mit mindestens einer prismaförmigen Zentrierausnehmung (56) versehen ist. In dem Wechselkopf (53) ist ein in zwei entgegengesetzten Drehrichtungen antreibbarer Schraubendreher in Bewegungsrichtung (V) des Wechselkopfes (53) verschiebbar, der mit einer der Spannschrauben (7) zusammenwirkt. Der Schraubendreher (21) ist von einer Gewindebüchse (58) konzentrisch umgeben, welche ein zu einer der Spannschrauben (7) passendes Innengewinde (59) aufweist, und in Verschieberichtung (V) des Wechselkopfes (53) in diesem verschiebbar gelagert ist. Die Gewindebüchse (58) ist in Richtung auf das äußere Ende des Wechselkopfes (53) durch eine Feder (60) belastet und in entgegengesetzter Richtung durch eine Antriebsvorrichtung (61, 62) bewegbar.

./...

FIG.1

## Werkzeugmaschine mit Werkzeugwechselvorrichtung.

Die Erfindung betrifft eine Werkzeugmaschine mit einer Werkzeugwechselvorrichtung, mit einer an der Werkzeugmaschine vorgesehenen Werkzeughalteraufnahme, insbesondere einer Spindel, mit einem in die Werkzeughalteraufnahme einsetzbaren, ein Werkzeug tragenden Werkzeughalter, mit einem diesen beim Werkzeugwechsel erfassenden Wechselarm und mit einer automatischen Betätigungsvorrichtung, die eine Spanneinrichtung zur Verbindung des Werkzeughalters mit der Werkzeughalteraufnahme betätigt, wobei an einem dieser letztgenannten Teile eine zylindrische Aufnahmebohrung, die an ihrer Stirnseite eine sie umgebende, senkrecht zur Bohrungsachse verlaufende, ringförmige Stirnfläche, und am anderen Teil ein in die Aufnahmebohrung genau passender zylindrischer Schaft vorgesehen sind, der eine ihn umgebende, senkrecht zur Schaftachse verlaufende Ringfläche aufweist.

Bei einer derartigen bekanten Werkzeugmaschine (DE-AS 16 52 699) sind die Werkzeughalter mit einem zylindrischen Schaft versehen. Die Spindel der Werkzeugmaschine weist an ihrem Spindelkopf eine zylindrische Aufnahmebohrung auf, in welche der Schaft paßt, und außerdem eine den Schaft erfassende Spannzange. Die Spannzange weist mehrere Klauen auf, die in einer konischen Bohrung der Spindel angeordnet sind. Durch mehrere Tellerfedern wird die Spannzange in die konische Aufnahmebohrung hineingezogen, wodurch ihre Klauen gegen den Schaft des Werkzeughalters gepreßt werden. Durch diese Anpressung der Klauen an den Schaft des Werkzeughalters soll das Drehmoment von der Spindel auf den Werkzeughalter übertragen werden. Die zwischen den Klauen und dem Schaft vorhandene Reibung reicht jedoch nicht aus, um bei den heute üblichen hohen Antriebsleistungen von Werkzeugmaschinen das Drehmoment sicher zu übertragen. Außerdem ist bei dieser bekannten Werkzeugmaschine nur der Schaft des Werkzeughalters in der Aufnahmebohrung gehalten. Sämtliche auf die Schneide des Werkzeuges wirkenden Querkräfte müssen von dem verhältnismäßig dünnen Schaft, der eine geringe Biegesteifigkeit aufweist, auf die Spindel übertragen werden. Wegen der geringen Biegesteifigkeit des Schaftes kann die freie Länge des Werkzeuges auch nur verhältnismäßig klein sein. Wegen der Spannzangenklemmung ist der Durchmesser des Schaftes stets erheblich kleiner als der Spindelaußendurchmesser.

Die bei Bohr- und Fräsmaschinen häufigste Verbindung zwischen Werkzeugmaschinenspindel und Werkzeughalter, bei der der Werkzeughalter einen in eine kegelförmige Aufnahmebohrung der Spindel eingreifenden Kegelschaft aufweist, hat ähnliche Nachteile. Hierbei wird beispielsweise ein ISO-Kegel 50 nach DIN 2080, dessen größter Durchmesser etwa 70 mm beträgt, in einer Spindel aufgenommen, deren Außendurchmesser 128 mm ist. Sämtliche auf der Schneide des Werkzeuges wirkenden Querkräfte müssen also von dem gegenüber der Werkzeugmaschinenspindel verhältnismäßig dünnen Kegelschaft auf die Spindel übertragen werden. Damit sich hierbei der Kegelschaft in der Aufnahmebohrung nicht lockert, bedarf es einer sehr hohen Einzugskraft einer in der Spindel angeordneten Einzugsvorrichtung, welche den Kegelschaft, z.B. unter der Wirkung von Tellerfedern, in die Aufnahmebohrung hineinzieht. Dabei entsteht auch bei sehr hoher Tellerfeder-Vorspannung eine beträchtliche Minderung der Einzugskraft, wobei es vorkommen kann, daß eine beträchtliche, radial gerichtete Schnittkraft, wirkend an einem weit aus der Spindel herausragenden Werkzeug, infolge seiner Kegelgestalt das Werkzeug sogar in der Aufnahmebohrung der Spindel zeitweilig lockert. Es entstehen dann Rattererscheinungen. Es ist also diese Verbindung an heutigen, leistungsstarken Werkzeugmaschinen nicht immer in der Lage, die volle Maschinenleistung auf das Werkzeug zu übertragen. Ein weiterer Nachteil besteht darin, daß der größte Durchmesser des Kegelschaftes erheblich kleiner ist als der Spindel-Außendurchmesser. Da die Biegesteifigkeit des Werkzeughalters durch seinen kleinsten, nicht eingespannten Durchmesser bestimmt wird, ist die Biegesteifigkeit nur abhängig von dem größten Durchmesser des Kegelschaftes. Werkzeuge oder Werkzeughalter mit Kegelschaft haben weiterhin den Nachteil, daß der Kegelschaft verhältnismäßig lang ausgebildet sein muß. Da beim Werkzeugwechsel der Kegelschaft vollständig auf seiner ganzen Länge aus der Aufnahmebohrung der Spindel herausgezogen werden muß, ist zum Werkzeugwechsel nicht nur ein entsprechend großer Raum im Bereich vor der Spindel freizuhalten, sondern auch noch daneben, weil die Greifarme von Werkzeugwechselvorrichtungen meistens paarweise um 180° drehbar angeordnet sind (vgl. DE-PS 17 77 143). Die große Länge des Kegelschaftes hat auch den Nachteil, daß sich das Gesamtgewicht des auszuwechselnden Werkzeuges erhöht, so daß die Wechselvorrichtung und auch das Magazin, welches die nicht in Benutzung befindlichen Werkzeuge aufnimmt, entsprechend stabil ausgelegt sein müssen. Werkzeug und Werkzeughalter mit Kegelschaft weisen außerdem auch noch einen Mitnahmeflansch auf, der im Durchmesser wesentlich größer ist als der Nenndurchmesser des Kegelschaftes. Wegen dieses Mitnahmeflansches können die Werkzeuge im Werkzeugmagazin nur in größeren Abständen angeordnet sein, was zu großen Abmessungen der Magazine bzw. bei kleinen Magazinen zu einer geringen Kapazität führt.

Der Erfindung liegt die Aufgabe zugrunde, bei einer Werkzeugmaschine mit Werkzeugwechselvorrichtung der eingangs erwähnten Art die Verbindung zwischen Werkzeughalteraufnahme und Werkzeughalter dahingehend zu verbessern, daß beim Festspannen des Werkzeughalters in der Werkzeugaufnahme die Ringfläche mit hoher Vorspannkraft an die Sitrnfläche der Werkzeughalteraufnahme angepreßt wird, um hierdurch einerseits einen möglichst hohen Anteil eines Drehmoments durch Reibschluß von der Stirnfläche auf die Ringfläche zu übertragen und andererseits eine biegesteife
Verbindung zwischen Werkzeughalter und Werkzeughalteraufnahme zu schaffen, wobei die Spanneinrichtung, Betätigungsvorrichtung und die Werkzeugwechselvorrichtung von einfachem, betriebssicheren Aufbau sind.

Diese Aufgabe wird nach der Erfindung dadurch gelöst, daß der Werkzeughalter die zylindrische Aufnahmebohrung, und im Bereich derselben, zwei diametral gegenüberliegende, radial verlaufende Innengewinde mit je einer mit einem kegelförmigen Ansatz oder einer kegelförmigen Vertiefung versehene Spannschrauben aufweist, daß an der Werkzeughalteraufnahme der Schaft angeordnet und in einer Querbohrung desselben ein Spannbolzen radial verschiebbar ist, der an seinen beiden Enden je eine mit den kegelförmigen Ansätzen bzw. Vertiefungen der Spannschrauben zusammenwirkende, kegelförmige Vertiefung bzw. einen kegelförmigen Ansatz aufweist, daß der Abstand der Achse der Innengewinde von der Stirnfläche etwas größer ist als der Abstand derAchse der Querbohrung von der Ringfläche, so daß beim Anziehen einer der Spannschrauben diese auf den Spannbolzen im Sinne eines Aufeinanderpressens von Ringfläche und Stirnfläche einwirkt, daß am freien Ende des Wechselarmes ein radial zur Bohrungsachse der Aufnahmebohrung beweglicher Wechselkopf vorgesehen ist, der an seinem dem Werkzeughalter zugekehrten äußeren Ende mit mindestens einer prismaförmigen Zentrierausnehmung versehen ist, daß in dem Wechselkopf ein in zwei entgegengesetzten Drehrichtungen motorisch antreibbarer Schraubendreher in Bewegungsrichtung des Wechselkopfes verschiebbar ist, der an seinem freien Ende einen mit einer der Spannschrauben zusammenwirkenden, im Zentrum der Zentrierausnehmung vorgesehenen Mitnehmer aufweist, daß in dem Wechselkopf eine den Schraubendreher konzentrisch umgebende Gewindebüchse vorgesehen ist, welche ein zu einer der Spannschrauben passendes Innengewinde aufweist, und in Bewegungsrichtung des Wechselkopfes in diesem verschiebbar gelagert ist, und daß die Gewindebüchse in Richtung auf das äußere Ende des Wechselkopfes durch eine Feder belastet und in entgegengesetzter Richtung durch eine Antriebsvorrichtung bewegbar ist.

Die auf den Spannbolzen wirkende Spannschraube bewirkt an der zweiten Spannschraube eine gleich große, jedoch entgegengesetzt wirkende Reaktionskraft, wodurch die Spannkraft einer Schraube verdoppelt wird. Durch die kegelförmigen Ansätze bzw. Vertiefungen erzeugen die radial wirkenden Spannkräfte der Spannschrauben axial wirkende Kräfte. Durch den axialen Versatz der Achsen der Spannschrauben und des Spannbolzens wird dieser durch die axial wirkenden Kraftkomponenten ebenfalls in axialer Richtung bewegt und preßt hierdurch die Ringfläche mit hoher Verspannkraft an die Stirnfläche. Durch die intensive und gleichmäßige Verspannung von Ringfläche und Stirnfläche wird über diese Flächen bereits ein hoher Anteil des Drehmoments durch Reibschluß übertragen. Der Rest des Drehmoments wird durch die Spannschrauben und den Spannbolzen übertragen. Wichtig ist ferner, daß die auf das Werkzeug einwirkenden Querkräfte bei guter Anlage der Ringfläche an der Stirnfläche von diesen beiden Flächen auf einen verhältnismäßig großen, dem Spindeldurchmesser entsprechenden Durchmesser übertragen werden. Hierdurch wird eine sehr biegesteife Verbindung zwischen Werkzeughalteraufnahme (Spindel) und Werkzeughalter erreicht. Damit wird die Bearbeitungsgenauigkeit gesteigert, das Werkzeug ist weniger schwingungsgefährdet, es ist möglich, die Maschinenleistung besser auf das Werkzeug zu übertragen, und auch größere Ausladungen des Werkzeuges sind möglich. Wenn am Werkzeughalter eine Ringfläche mit einem Durchmesser von 120 mm vorhanden ist, so behält ein solches Werkzeug seine Biegesteifigkeit bis zu einer Ausladung von wenigstens 480 mm. Es können damit also höhere Schnittleistungen und kürzere Bearbeitungszeiten erreicht werden. Ferner ist es von Vorteil, daß alle an der Verspannung beteiligten Elemente, die eventuell bei häufigem Werkzeugwechsel einem Verschleiß unterworfen sein könnten, nämlich die Spannschrauben und der Spannbolzen, ohne weiteres austauschbar sind. Durch die Verwendung eines radial
verschiebbaren Spannbolzens wird vermieden, daß beim Anziehen einer der Spannschrauben der Schaft in der Aufnahmebohrung radial zur Seite gedrückt wird. Da auf den
Schaft keine Radialkräfte einwirken, findet auch keine
Verlagerung der Schaftachse gegenüber der Spindelachse
statt, so daß das Werkzeug genau koaxial zur Bohrungs-
bzw. zur Spindelachse angeordnet ist. Es wird damit eine
außerordentlich hohe Einbaugenauigkeit und Wiederholungsgenauigkeit gewährleistet, wodurch wiederum die Bearbeitungsgenauigkeit gesteigert wird. Gegenüber Werkzeugen
und Werkzeughaltern mit Kegelschaft hat die erfindungsgemäße Ausgestaltung von Werkzeughalter und Werkzeughalteraufnahme den Vorteil, daß bei gleicher Biegesteifigkeit
der Verbindung die axiale Länge des in die Aufnahmebohrung
einsetzbaren zylindrischen Schaftes wesentlich kürzer ausgebildet sein kann, als die eines Kegelschaftes, der die
Übertragung einer gleich großen Leistung ermöglicht. Dies
ist gerade bei Werkzeugmaschinen mit Werkzeugwechselvorrichtungen von entscheidender Bedeutung. Beim Werkzeugwechsel sind nämlich viel kürzere Wege in Achsrichtung
des Werkzeuges erforderlich, wodurch sich ein erheblich
verringerter Platzbedarf beim Werkzeugwechsel ergibt.
Außerdem ist auch das Gewicht des zylindrischen Schaftes
wesentlich geringer als das Gewicht eines Kegelschaftes
mit Flansch, welcher die Übertragung der gleichen Leistung
ermöglichen würde. Hierdurch können die Werkzeugwechselvorrichtung und das Magazin leichter gebaut werden, da
sie geringere Gewichte transportieren bzw. aufnehmen müssen. Weiterhin entfällt bei dem neuen Werkzeughalter ein
Mitnahmeflansch, wodurch die Werkzeuge in geringerem Abstand im Magazin aufgenommen werden können, das Magazin
also hierdurch bei gleicher Größe mehr Werkzeuge aufnehmen
kann oder bei gleicher Kapazität kleiner ausgebildet sein kann.

Die Werkzeugwechselvorrichtung sowie die Spanneinrichtung und ihre Betätigungsvorrichtung sind bei der erfindungsgemäßen Ausgestaltung besonders einfach. Bei der erfindungsgemäßen Ausgestaltung des Greiferkopfes hat die Spannschraube des Werkzeughalters eine doppelte Funktion. Sie dient nicht nur zum festen Verspannen des Werkzeughalters mit der Werkzeughalteraufnahme, sondern auch zur festen und genauen Verbindung des Werkzeughalters mit dem Greiferkopf während des Werkzeugwechsels. Hierdurch wird auch die Werkzeugwechselvorrichtung vereinfacht. Ein ganz besonderer Vorteil besteht aber auch darin, daß der Werkzeughalter keinerlei Rillen oder sonstige Ausnehmung für die Wechselvorrichtung aufzuweisen braucht. Der Werkzeughalter erfährt also bei dem erfindungsgemäßen System keinerlei Schwächung. Demgegenüber ist bei bekannten Wechselvorrichtungggen an dem Wechselarm meist ein Greifer vorgesehen, der in eine Ringrille des Werkzeughalters eingreift. Durch diese Ringrille wird der Werkzeughalter geschwächt. Will man eine derartige Schwächung vermeiden, so müßte der Werkzeughalter mit einem im Durchmesser größeren Flansch versehen sein, in welchem dann die Ringrille angeordnet ist. Durch diesen Flansch werden die Herstellungskosten des Werkzeughalters jedoch verteuert. Außerdem müssen wegen diesem Flansch die Werkzeughalter im Werkzeugmagazin in einem größeren gegenseitigen Abstand angeordnet werden. Die erfindungsgemäße Werkzeugwechselvorrichtung ermöglicht demgegenüber die Anordnung von Werkzeughaltern im Magazin in wesentlich geringerem Abstand. Dies ist nicht nur auf den Wegfall des Flansches zurückzuführen, sondern auch noch darauf, daß der erfindungsgemäße Wechselkopf den Werkzeughalter nur von einer Seite erfaßt, so daß zwischen zwei benachbarten Werkzeughaltern im Magazin nur ein sehr geringer Abstand vorhanden sein muß. Die erfindungsgemäße Ausgestaltung löst also auch das Problem der Vereinfachung des Wechselarmes, einer platzsparenden Anordnung der Werkzeughalter im Magazin, eine Vereinfachung der Herstellung des Werkzeughalters durch Wegfall der Greiferrille und einer Verbesserung der Steifigkeit des Werkzeughalters.

Vorteilhafte Ausgestaltungen der Erfindung sind in den Unteransprüchen gekennzeichnet.

Die Erfindung ist anhand von in der Zeichnung dargestellten Ausführungsbeispielen in folgendem näher erläutert. Es zeigen:

Figur 1 einen Axialschnitt der Verbindung zwischen Werkzeughalter und Werkzeughalteraufnahme am Beispiel einer Werkzeugmaschinenspindel,

Figur 2 einen Radialschnitt nach der Linie II-II der Figur 1,

Figur 3 eine Draufsicht auf den Wechselkopf in Richtung III der Figur 2.

Die Verbindung zwischen Werkzeughalter und Werkzeughalteraufnahme wird in folgendem anhand einer die Werkzeughalteraufnahme bildenden Werkzeugmaschinenspindel 1 erläutert.

Die Werkzeugmaschinenspindel 1 ist drehbar in dem Spindelstock 2 einer Werkzeugmaschine gelagert. Sie weist an ihrem vorderen freien Ende eine Werkzeughalteraufnahme 51 für den Werkzeughalter 50 auf. Der Werkzeughalter hat an seinem der Spindel zugekehrten Ende eine zylindrische Aufnahmebohrung 3, die von einer ringförmigen und senkrecht zur Spindelachse S-S verlaufenden ringförmigen Stirnfläche 4 umgeben ist. Der Werkzeughalter 50 weist ferner im Bereich der zylindrischen Aufnahmebohrung 3 zwei diametral gegenüberliegende, radial verlaufende Innengewinde 5, 6 auf, in denen je eine Spannschraube 7, 8 radial verschraubbar ist. Die Spannschraube 7 weist einen kegelförmigen Ansatz 7a und die Spannschraube 8 eine kegelstumpfförmige Vertiefung 8a auf. Der Kegelwinkel (Spitzenwinkel) des kegelförmigen Ansatzes 7a und der kegelförmigen Vertiefung 8a beträgt vorteilhaft 90°. Die Achse A1 der Innengewinde 5, 6 weist von der Stirnfläche 4 einen Abstand a1 auf. Der Werkzeughalter 50 trägt an seinem freien Ende 50a beispielsweise einen Bohrkopf, ein Ausdrehwerkzeug, einen Fräser, eine Reibahle oder dgl., die fest oder auswechselbar, gegebenenfalls auch unter Zwischenschaltung von Zwischenstücken mit dem Werkzeughalter 50 verbunden sind.

Die Werkzeughalteraufnahme 51 weist einen in die Aufnahmebohrung 3 mit sehr geringem Spiel (praktisch spielfrei) passenden zylindrischen Schaft 10 auf. Beträgt der Nenndurchmesser der zylindrischen Aufnahmebohrung 3 und des Schaftes 10 beispielsweise 63 mm, so weist die Aufnahmebohrung eine Toleranz von +0,002 - +0,005 mm auf, der Schaft eine Toleranz von -0,002 - -0,005 mm. Gegebenenfalls könnte der Schaft 10 auch direkt mit der Werkzeugmaschinenspindel verbunden sein.

In dem zylindrischen Schaft 10 ist eine Querbohrung 11 vorgesehen, in welcher ein zylindrischer Spannbolzen 12 radial verschiebbar gelagert ist. Dieser Spannbolzen 12 weist an seinem einen Ende einen der kegelförmigen Vertiefung 8a entsprechenden kegelförmigen Ansatz 12a auf und an seinem anderen Ende eine dem kegelförmigen Ansatz 7a entsprechende Vertiefung 12b. Der Abstand a2 der Achse A2 der Querbohrung 11 von einer den Schaft 10 umgebenden Ringfläche 13 ist etwas kleiner als der oben definierte Abstand a1.

Damit der Werkzeughalter ohne Ausbau des Spannbolzens 12 an der Spindel 1 befestigt werden kann, ist es zweckmäßig, wenn die Länge L des Spannbolzens 12 etwas kleiner ist als der Durchmesser D des Schaftes 10.

Der Spannbolzen 12 weist ferner im mittleren Bereich seiner Mantelfläche eine Ringnut 14 auf, die eine mehrfache Funktion hat. In die Ringnut 14 greift nämlich eine im Schaft 10 eingeschraubte Sicherungsschraube 15 ein. Der Durchmesser dieser Sicherungsschraube bzw. des in die Ringnut 14 eingreifenden Teiles derselben, ist dabei kleiner gewählt als die axiale Länge der Ringnut 14, so daß sich der Spannbolzen 12 zwar in der Querbohrung 11 frei verschieben läßt, jedoch keinesfalls aus der Querbohrung 11 herausfällt. Die Ringnut 14 hat weiterhin die Aufgabe, Kühlflüssigkeit, die von der Spindel durch einen Kühlmittelkanal 16 in den Schaft 10 gelangt, in den Kühlmittelkanal 17 des Werkzeughalters 50 bis zu den Schneiden des Werkzeuges weiterzuleiten.

Außerdem kann in der Werkzeughalteraufnahme 51 ein achsparalleler Indexierbolzen 27 vorgesehen sein, durch den die Winkelstellung des Werkzeughalters 50 gegenüber der Spindel 1 genau festgelegt wird. Dieser Indexierbolzen 27 greift in eine entsprechende, achsparallele Bohrung 27a des Werkzeughalters 50 ein.

Zum Werkzeugwechsel braucht lediglich die Spannschraube 7 soweit gelöst zu werden, daß das vordere Ende ihres kegelförmigen Ansatzes 7a nicht mehr in die Aufnahmebohrung 3 eintaucht. Der Spannbolzen 12 kann sich dann in der Querbohrung 11 soweit verschieben, daß sein kegelförmiges Ende 12a aus der kegelförmigen Vertiefung 8a austritt und nunmehr der Werkzeughalter 50 nach links von der Spindel 1 entfernt werden kann.

Daraufhin wird der Werkzeughalter 50 eines anderen Werkzeuges mit seiner Aufnahmebohrung 3 auf den Schaft 10 aufgeschoben. Wird nunmehr die Spannschraube 7 in dem Gewinde 5 radial nach innen verschraubt, so verschiebt ihr kegelförmiger Ansatz 7a den Spannbolzen 12 radial, so daß sein kegelförmiger Ansatz 12a wieder in die Vertiefung 8a der Spannschraube 8 eingreift. Die radial wirkende Spannkraft der Spannschraube 7 erzeugt an der Spannschraube 8 eine entgegengesetzt wirkende gleich große Reaktionskraft. Durch den axialen Versatz der Achsen A1 und A2 erzeugt jede der beiden Spannschrauben 7, 8 eine gleich große axial gerichtete Kraftkomponente. Demzufolge erzeugt die Spannkraft der Spannschraube 7 bei einem Kegelwinkel von 90° eine Verdoppelung der Spannkräfte und drückt die Ringfläche 13 mit einer Kraft, die zweimal so groß ist wie die Spannkraft, an die ringförmige Stirnfläche 4 an. Da die Spannschrauben 7, 8 diametral gegenüberliegend auf den Spannbolzen 12 einwirken, ist die Verspannkraft zwischen den Flächen 4, 13 am ganzen Umfang gleichmäßig. Da sich der Spannbolzen 12 in der Querbohrung 11 verschieben läßt, wird auch keine einseitig wirkende Kraft auf den Schaft 10 ausgeübt. Infolgedessen fluchtet die Achse des Werkzeughalters 50 genau mit der Spindelachse S-S.

Die Verwendung von je einer Spannschraube 7 mit kegelförmigem Ansatz 7a und einer Spannschraube 8 mit kegelförmiger Vertiefung 8a, sowie einem entsprechenden Spannbolzen 12, der an einem Ende einen kegelförmigen Ansatz 12a und am anderen Ende eine kegelförmige Vertiefung 12b aufweist, hat sich in der Praxis als besonders vorteilhaft erwiesen. Gegebenenfalls könnte die Anordnung aber auch so getroffen sein, daß beide Spannschrauben je mit einer kegelförmigen Vertiefung versehen sind und der Spannbolzen dementsprechend an beiden Enden je einen kegelförmigen Ansatz aufweist.

Am freien Ende des Wechselarmes 52, der in seinem Zentrum um eine parallel zur Spindel verlaufende Achse schwenkbar gelagert sein kann, ist radial zur Bohrungsachse der Aufnahmebohrung 3 ein Wechselkopf 53 in Richtung V verschiebbar gelagert. Zur verschiebbaren Lagerung dienen im vorliegenden Fall zwei Rundstangen 54, die in entsprechende Führungsbohrungen 55 des Wechselkopfes 53 eingreifen. Es kann aber auch jede andere Geradführung verwendet werden.

Der Wechselkopf 53 weist an seinem äußeren, dem Werkzeughalter 50 zugekehrten Ende, eine erste prismaförmige Zentrierausnehmung 56 auf, deren Scheitellinie 56a parallel zur Achse der Aufnahmebohrung 3 bzw. zur Achse des Werkzeughalters 50 verläuft. Damit der Wechselkopf ohne Drehbewegung auch Werkzeughalter aufnehmen kann, deren Achse um 90° verdreht zu der Achse des Werkzeughalters 50 angeordnet ist, weist der Wechselkopf 53 auch noch eine zweite, senkrecht zu der ersten Zentrierausnehmung 65 verlaufende Zentrierausnehmung 57 auf, deren Scheitellinie 57a senkrecht zur Scheitellinie 56a verläuft.

In dem Wechselkopf 53 ist ferner ein Schraubendreher 21 angeordnet, der motorisch in zwei entgegengesetzten Drehrichtungen antreibbar ist. Der Schraubendreher weist an seinem freien Ende einen in die Spannschraube 7 passenden Mitnehmer 24 auf. Der Mitnehmer 24 ist im Zentrum der Zentrierausnehmung 56 bzw. 57 angeordnet. Der Schraubendreher 21 weist einen zylindrischen Schaft 21a auf, der von einem Kolben 26 konzentrisch umgeben ist. Dieser Kolben 26 ist in einem im Wechselkopf 53 eingelassenen Zylinder 28 verschiebbar. Damit kann der gesamte Schraubendreher 21 in Richtung V, d.h. in Verschieberichtung des Wechselkopfes 53 in Richtung seiner Achse A3 senkrecht zur Bohrungsachse der Aufnahmebohrung 3 verschoben werden.

In dem Wechselkopf 53 ist eine Gewindebüchse 58 vorgesehen, die den Schraubendreher 21 konzentrisch umgibt. Die Gewindebüchse 58 weist ein zu der Spannschraube 7 passendes Innengewinde 59 auf, das dem Innengewinde 5 im Werkzeughalter 50 entspricht. Auch die Gewindebüchse 58 ist in dem Wechselkopf 53 in Verschieberichtung V des Wechselkopfes 53 verschiebbar gelagert. Die Gewindebüchse 58 ist ferner durch eine Feder 60 in Richtung auf das äußere Ende des Wechselkopfes 53 belastet. Damit sie entgegen dem Druck der Feder 60 bewegt werden kann, ist eine Antriebsvorrichtung in Form eines die Gewindebüchse 58 konzentrisch umgebenden Kolbens 61 vorgesehen, welcher in einem entsprechenden Zylinderraum 62 des Wechselkopfes 53 verschiebbar gelagert ist.

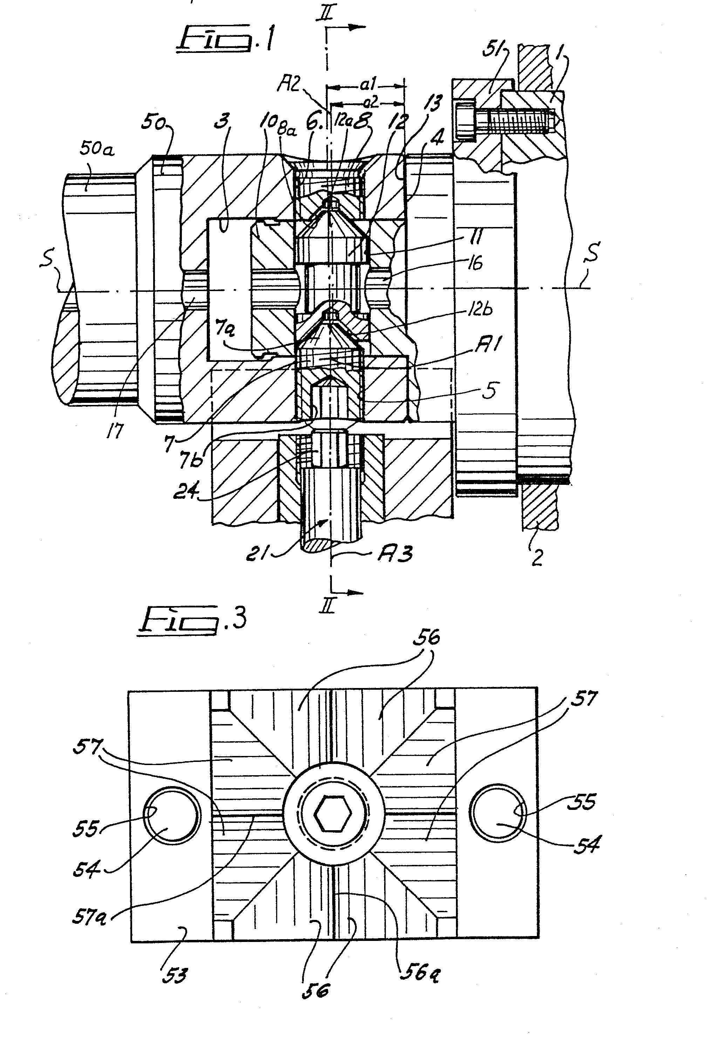

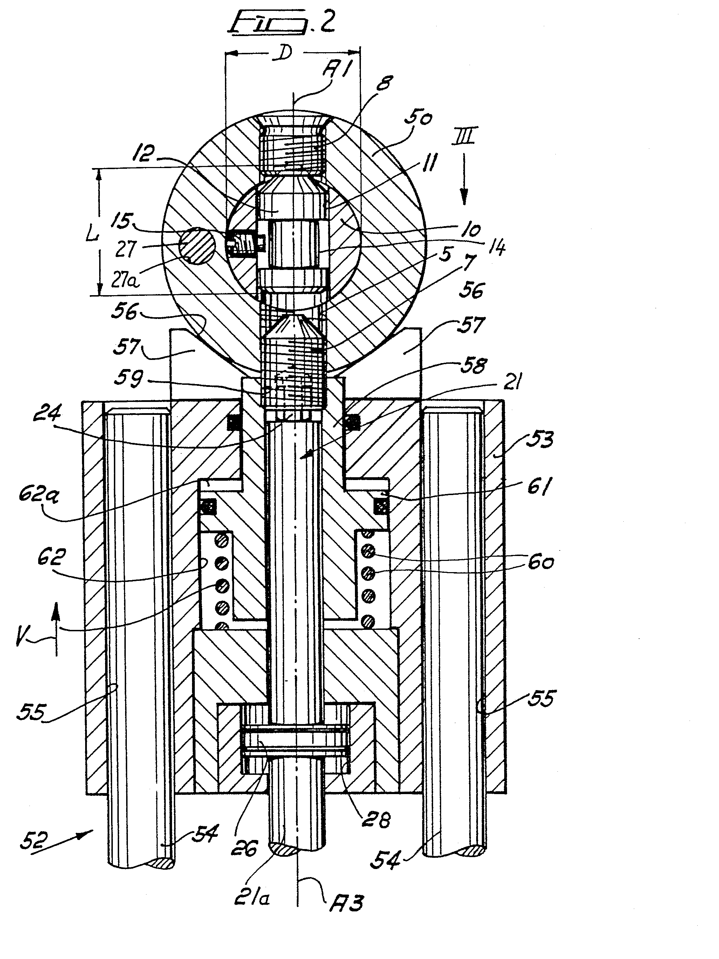

In Figur 1 sind der Werkzeughalter 50 und die Werkzeughalteraufnahme 51 in verspannter Vetriebsstellung dargestellt. Zum Werkzeugwechsel wird die Spindel 1 in vorbestimmter Stellung stillgesetzt und der Wechselarm 52 wird in eine Lage geschwenkt, in welcher die Achse A3 des Schraubendrehers 21 in etwa mit der Achse A1 in der Spannschraube 7 fluchtet. Der Wechselkopf 58 wird dann hydraulisch, pneumatisch oder mechanisch in Richtung V auf den Werkzeughalter 50 zu bewegt, bis seine prismaförmige Zentrierausnehmung 56 an dem Außendurchmesser des Werkzeughalters 50 zur Anlage kommt undsich dabei gegenüber diesem zentriert. Mittels des Kolbens 26 wird der Schraubendreher 21 in Richtung auf die Spannschraube 7 verschoben und gleichzeitig im linken Drehsinn angetrieben. Sein Mitnehmer 24 dringt in die Mitnahmeöffnung der Spannschraube 7 ein. Anschliessend dreht die Antriebswelle den Schraubendreher 21 im linken Drehsinn, wodurch sich die Spannschraube 7 gegenüber der Aufnahmebohrung 3 radial nach außen bewegt. Die Spannschraube 7 schraubt sich dabei gleichzeitig in das Innengewinde 59 der Gewindebüchse 58 ein. Damit das Schraubengewinde bei Beginn der Einschraubung keinen Zwang erfährt, steht die Gewindebüchse unter mäßigem Druck der Feder 60. Ist die Spannschraube 7 etwa mit ihrer halben Länge in die Gewindebüchse 58 eingeschraubt, so wird das in dem Zylinderraum 62a befindliche Hydrauliköl unter Druck gesetzt, wodurch die Gewindebüchse 58 entgegen der Pfeilrichtung V bewegt wird. Da der Werkzeughalter 50 über die Spannschraube 7 mit der Gewindebüchse 58 verbunden ist, wird hierdurch der Werkzeughalter 50 mit dem Wechselkopf 53 fest verspannt, wobei er durch die Zentrierausnehmung 56 auch genau ausgerichtet ist. Der Werkzeughalter und das von ihm getragene Werkzeug bleiben auch bei größerer Länge und größerem Gewicht absolut genau gegenüber dem Wechselkopf 53 ausgerichtet. Es ist besonders vorteilhaft, daß alle Kräfte zwischen dem Werkzeughalter 50 und dem Wechselkopf 53 in sich geschlossen sind und nach außen keine Auswirkung haben. Somit ist das System Werkzeughalter 50 und Wechselkopf 53 im Gleichgewicht.

Sobald Werkzeughalter 50 und Wechselkopf 53 fest miteinander verspannt sind, wird der Wechselarm 52 in Achsrichtung der Spindel 1 gemäß Figur 1 nach links bewegt, wodurch der Werkzeughalter 50 von dem Schaft 10 abgezogen wird. Anschließend kann der Wechselarm 52 verschwenken und den Werkzeughalter 50 einem nicht dargestellten Magazin übergeben. Gleichzeitig wird durch einen zweiten Wechselarm, der genauso ausgebildet ist wie der beschriebene Wechselarm, und zu diesem diametral gegenüberliegend angeordnet ist, ein anderer Werkzeughalter auf den Schaft 10 aufgeschoben. Dessen Schraubendreher dreht die Spannschraube 7 in entgegengesetzter rechter Drehrichtung, wodurch die Verbindung zwischen Wechselkopf und Werkzeughalter wieder gelöst wird und der Werkzeughalter wieder fest mit der Werkzeughalteraufnahme verspannt wird. Nachdem der Wechselkopf 53 entgegen der Pfeilrichtung V in seine Ausgangsstellung zurückbewegt wurde, ist der Werkzeugwechsel beendet.

Ansprüche

1. Werkzeugmaschine mit Werkzeugwechselvorrichtung, mit einer an der Werkzeugmaschine vorgesehenen Werkzeughalteraufnahme, insbesondere einer Spindel, mit einem in die Werkzeughalteraufnahme einsetzbaren, ein Werkzeug tragenden Werkzeughalter, mit einem diesen beim Werkzeugwechsel erfassenden Wechselarm und mit einer automatischen Betätigungsvorrichtung, die eine Spanneinrichtung zur Verbindung des Werkzeughalters mit der Werkzeughalteraufnahme betätigt, wobei an einem dieser letztgenannten Teile eine zylindrische Aufnahmebohrung, die an ihrer Stirnseite eine sie umgebende, senkrecht zur Bohrungsachse verlaufende, ringförmige Stirnfläche, und am anderen Teil ein in die Aufnahmebohrung genau passender zylindrischer Schaft vorgesehen sind, der eine ihn umgebende, senkrecht zur Schaftachse verlaufende Ringfläche aufweist, dadurch gekennzeichnet, daß der Werkzeughalter (50) die zylindrische Aufnahmebohrung (3) und im Bereich derselben zwei diametral gegenüberliegende, radial verlaufende Innengewinde (5,6) mit je einer mit einem kegelförmigen Ansatz (7a) oder einer kegelförmigen Vertiefung (8a) versehene Spannschrauben (7,8) aufweist, daß an der Werkzeughalteraufnahme (51) der Schaft (10) angeordnet und in einer Querbohrung (11) desselben ein Spannbolzen (12) radial verschiebbar ist, der an seinen beiden Enden je eine mit den kegelförmigen Ansätzen (7a) bzw. Vertiefungen (8a) der Spannschrauben (7,8) zusammenwirkende, kegelförmige Vertiefung (12b) bzw. einen kegelförmigen Ansatz (12) aufweist, daß der Abstand (a1) der Achse (A1) der Innengewinde (5,6) von der Stirnfläche (4) etwas größer ist als der Abstand (a2) der Achse (A2) der Querbohrung (11) von der Ringfläche (13), so daß beim Anziehen einer der Spannschrauben (7) diese auf den Spannbolzen (12) im Sinne eines Aufeinanderpressens von Ringfläche (13) und Stirnfläche (4) einwirkt, daß am freien Ende des Wechselarmes (52) ein radial zur Bohrungsachse (S) der Aufnahmebohrung (3) beweglicher Wechselkopf (53) vorgesehen ist, der an seinem dem Werkzeughalter (50) zugekehrten äußeren Ende mit mindestens einer prismaförmigen Zentrierausnehmung (56,57) versehen ist, daß in dem Wechselkopf (53) ein in zwei entgegengesetzten Drehrichtungen motorisch antreibbarer Schraubendreher (21) in Bewegungsrichtung (V) des Wechselkopfes (53) verschiebbar ist, der an seinem freien Ende einen mit einer der Spannschrauben (7) zusammenwirkenden, im Zentrum der Zentrierausnehmung (56,57) vorgesehenen Mitnehmer (24) aufweist, daß in dem Wechselkopf eine den Schraubendreher (21) konzentrisch umgebende Gewindebüchse (58) vorgesehen ist, welcheein zu einer der Spannschrauben (7) passendes Innengewinde (59) aufweist, und in Bewegungsrichtung (V) des Wechselkopfes (53) in diesem verschiebbar gelagert ist, und daß die Gewindebüchse (58) in Richtung auf das äußere Ende des Wechselkopfes (53) durch eine Feder (60) belastet und in entgegengesetzter Richtung durch eine Antriebsvorrichtung (61,62) bewegbar ist.

2. Werkzeugmaschine nach Anspruch 1, dadurch gekennzeichnet, daß als Antriebsvorrichtung ein die Gewindebüchse (58) konzentrisch umgebender Kolben (61) vorgesehen ist, welcher in einem entsprechenden Zylinderraum (62) des Wechselkopfes (53) verschiebbar ist.

3. Werkzeugmaschine nach Anspruch 1 oder 2, dadurch gekennzeichnet, daß am äußeren Ende des Wechselkopfes (53) eine sich senkrecht zu der ersten prismaförmigen Zentrierausnehmung (56) erstreckende zweite prismaförmige Zentrierausnehmung (57) vorgesehen ist.

4. Werkzeugmaschine nach Anspruch 1, dadurch gekennzeichnet, daß der Schraubendreher (21) einen zylindrischen Schaft (21a) aufweist, der von einem Kolben (26) konzentrisch umgeben ist, und daß dieser Kolben (26) in einem im Wechselkopf (53) eingelassenen Zylinder (28) axial verschiebbar und drehbar ist.

5. Werkzeugmaschine nach Anspruch 1, dadurch gekennzeichnet, daß die Länge (L) des Spannbolzens (12) kleiner ist als der Durchmesser (D) des Schaftes (10).

6. Werkzeugmaschine nach Anspruch 1, dadurch gekennzeichnet, daß die eine Spannschraube (8) eine kegelförmige Vertiefung (8a) und die andere Spannschraube (7) einen kegelförmigen Ansatz (7a) aufweist, daß dementsprechend der Spannbolzen (12) an seinem einen Ende mit einem kegelförmigen Ansatz (12a) und an seinem anderen Ende mit einer kegelförmigen Vertiefung (12b) versehen ist, und daß der Schraubendreher mit der den kegelförmigen Ansatz (7a) aufweisenden Spannschraube (7) zusammenwirkt.

0125434

FIG.1

FIG.3

Komet

Fig.2

Komet